# DEMANDE DE BREVET EUROPEEN

(11) **EP 3 536 920 A1**
(43) Date de publication de la demande: **11.09.2019**
(21) Numéro de dépôt: 19160717.5
(22) Date de dépôt: 05.03.2019
(51) Int. Cl.: F01N 3/20, F01N 3/00

(54) **PROCEDE DE CORRECTION D'UNE ESTIMATION D'UNE QUANTITE D'OXYDES D'AZOTE EN FONCTION D'UN TAUX D'HYGROMETRIE**

(30) Priorité: 08.03.2018 FR 1851994
(71) Demandeur: PSA Automobiles SA, 78300 Poissy (FR)
(72) Inventeur: DENYS, FABIEN, 92500 RUEIL MALMAISON (FR)

(57) **Abrégé**

L'invention porte principalement sur un procédé de correction d'une estimation d'une quantité d'oxydes d'azote (Est_Nox) générée par un moteur thermique de véhicule automobile, ledit véhicule automobile comportant des balais d'essuie-glaces, caractérisé en ce que ledit procédé comporte:
- une étape de mesure d'une température extérieure (T_ext) au véhicule automobile,
- une étape de détermination d'un niveau de vitesse des balais d'essuie-glaces (I_vit_EG),
- une étape de détermination d'un paramètre hygrométrique (P_hy) en fonction de la mesure de la température extérieure (T_ext) et du niveau de vitesse des balais d'essuie-glaces (I_vit_EG), et
- une étape de correction de l'estimation de la quantité d'oxydes d'azote (Est_Nox) en fonction du paramètre hygrométrique (P_hy) précédemment déterminé.

## Description

La présente invention porte sur un procédé de correction d'une estimation d'une quantité d'oxydes d'azote générée par un moteur thermique en fonction d'un taux d'hygrométrie. L'invention trouve une application particulièrement avantageuse avec les moteurs thermiques de véhicule automobile.

Dans un contexte de dépollution des gaz d'échappement d'un moteur, les systèmes de réduction catalytique sélective (ou SCR pour "Sélective Catalyst Réduction" en anglais) visent à réduire les oxydes d'azote (NOx) contenus dans les gaz d'échappement. Le fonctionnement du système SCR est basé sur une réaction chimique entre les oxydes d'azote et un réducteur prenant classiquement la forme d'ammoniac. L'injection de l'ammoniac dans la ligne d'échappement est généralement réalisée par l'intermédiaire d'une autre espèce chimique, telle que l'urée qui se décompose en ammoniac et en dioxyde de carbone sous l'effet de la chaleur.

Les réactions d'oxydo-réduction se produisent dans un catalyseur spécifique et sont contrôlées grâce à une sonde, dite sonde NOx, placée en aval de ce catalyseur. En effet, cette sonde NOx permet de corriger les quantités à injecter en cherchant le meilleur compromis entre l'efficacité du système et la désorption d'ammoniac. Ces corrections peuvent toutefois être réalisées uniquement lorsque des conditions particulières de fonctionnement sont réunies, ce qui limite les possibilités d'action de ce procédé de correction faisant intervenir la sonde NOx.

En parallèle, les quantités de réducteur à injecter sont calculées en permanence en fonction de la quantité d'oxydes d'azote déterminée en sortie du moteur, c'est-à-dire en amont du système de réduction catalytique. Pour des raisons de coût, cette quantité d'oxydes d'azote est calculée via un modèle d'émission.

Les quantités ne pouvant pas être corrigées en permanence par la sonde NOx, le modèle d'estimation doit être suffisamment précis pour ne pas faire diverger le système. En effet, dans le cas où la quantité d'oxydes d'azote en sortie du moteur est sous-estimée par le modèle, le calculateur moteur commande une sous-injection de réducteur, ce qui entraîne une efficacité insuffisante du système de post-traitement pour respecter les normes de dépollution. Dans le cas où la quantité d'oxydes d'azote en sortie du moteur est surestimée par le modèle, le calculateur moteur commande une sur-injection du réducteur, ce qui entraîne un relâchement d'ammoniac en sortie d'échappement (phénomène de désorption).

Les nouvelles normes de dépollution nécessitent d'utiliser le modèle dans des zones dans lesquelles il existe de nombreuses sources d'imprécisions dues notamment à l'hygrométrie qui n'est pas mesurée.

L'invention vise à remédier efficacement à cet inconvénient en proposant un procédé de correction d'une estimation d'une quantité d'oxydes d'azote générée par un moteur thermique de véhicule automobile, le véhicule automobile comportant des balais d'essuie-glaces, caractérisé en ce que ledit procédé comporte:
- une étape de mesure d'une température extérieure au véhicule automobile,
- une étape de détermination d'un niveau de vitesse des balais d'essuie-glaces,
- une étape de détermination d'un paramètre hygrométrique en fonction de la mesure de la température extérieure et du niveau de vitesse des balais d'essuie-glaces, et
- une étape de correction de l'estimation de la quantité d'oxydes d'azote en fonction du paramètre hygrométrique précédemment déterminé.

L'invention permet ainsi d'améliorer la performance du modèle d'estimation des oxydes d'azote, grâce au correctif lié à l'hygrométrie. L'invention présente également un intérêt économique, dans la mesure où elle ne nécessite pas l'utilisation d'un capteur hygrométrique dédié.

Selon une mise en oeuvre, le procédé comporte une étape de calcul d'un écart en hygrométrie absolue en fonction de la température extérieure et une étape de pondération de cet écart en hygrométrie absolue par un coefficient correctif.

Selon une mise en oeuvre, le coefficient correctif dépend du niveau de vitesse des balais d'essuie-glaces.

Selon une mise en oeuvre, le procédé comporte une étape de définition d'une hygrométrie fictive de référence, notamment à 50% pour une température de 20°C, et une étape de calcul d'une différence entre une hygrométrie absolue moyenne à la température mesurée et l'hygrométrie fictive de référence pour obtenir un écart par rapport à l'hygrométrie de référence.

Selon une mise en oeuvre, le procédé comporte l'étape de sommer l'écart en hygrométrie absolue pondéré et l'écart par rapport à l'hygrométrie de référence pour obtenir un écart en hygrométrie absolue standard.

Selon une mise en oeuvre, l'écart en hygrométrie absolue standard est multiplié par un gain de correction empirique pour obtenir le paramètre hygrométrique.

Selon une mise en oeuvre, le gain de correction empirique est obtenu par calibration.

Selon une mise en oeuvre, le niveau de vitesse des balais d'essuie-glaces est fourni par une fonction d'essuie-glaces automatique du véhicule automobile.

Selon une mise en oeuvre, le procédé est mis en oeuvre sur la base d'un pas de temps de calcul de l'ordre d'une seconde.

L'invention a également pour objet un calculateur comportant une mémoire stockant des instructions logicielles pour la mise en oeuvre du procédé de correction d'une estimation d'une quantité d'oxydes d'azote tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une ligne d'échappement dont le fonctionnement est supervisé par un calculateur mettant en oeuvre le procédé selon l'invention de correction d'une estimation d'une quantité d'oxydes d'azote;

La figure 2 est une représentation schématique des blocs fonctionnels mettant en oeuvre le procédé de correction de l'estimation d'une quantité d'oxydes d'azote en fonction de l'hygrométrie;

La figure 3 est une représentation graphique illustrant la normalisation de la vitesse des balais d'essuie-glaces permettant de déterminer un coefficient correctif en fonction d'un indice de vitesse des balais d'essuie-glaces;

La figure 4 est une représentation graphique de niveaux d'hygrométrie absolus en fonction de la température extérieure au véhicule.

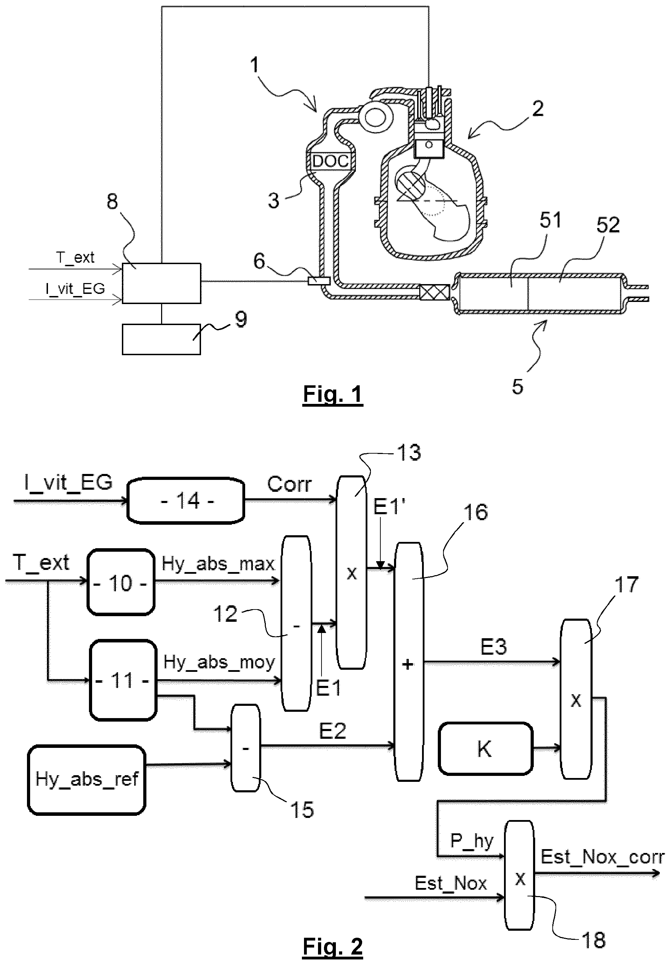

La figure 1 représente une ligne d'échappement 1 d'un moteur thermique 2 sur laquelle sont implantés un catalyseur 3 d'oxydation diesel (DOC) permettant l'oxydation d'hydrocarbure et de monoxyde de carbone en dioxyde de carbone et en eau; ainsi qu'un bloc de dépollution 5 comportant un catalyseur 51 de système SCR et un filtre à particules 52. Un injecteur 6 est positionné entre le catalyseur 3 d'oxydation diesel (DOC) et le bloc de dépollution 5.

Le système SCR est adapté à injecter un réducteur dans la ligne d'échappement 1 afin de transformer les oxydes d'azote (NOx) rejetés par le moteur 2 en azote et en eau. Ce réducteur est acheminé vers l'injecteur 6 via une canalisation au moyen d'un module jauge-pompe (non représenté) associé à un réservoir correspondant.

Un calculateur 8 comporte une mémoire 9 assurant notamment la commande du moteur thermique 2, ainsi qu'une gestion des différents éléments de post-traitement des gaz d'échappement. En particulier, le calculateur 8 gère l'injection de la quantité de réducteur dans la ligne d'échappement 1 en fonction de la quantité d'oxydes d'azote en amont du catalyseur 51 estimée par un modèle stocké dans la mémoire 9. La mémoire 9 stocke également les instructions logicielles pour la mise en oeuvre du procédé de correction de l'estimation d'une quantité d'oxydes d'azote issue du modèle décrit ci-après en référence avec les figures 2 à 4.

Ce procédé est basé sur la réalisation d'une mesure d'une température extérieure T_ext au véhicule automobile, ainsi que sur la détermination d'un niveau de vitesse des balais d'essuie-glaces I_vit_EG. La température extérieure T_ext est obtenue à partir d'un capteur dédié. Le niveau de vitesse des balais d'essuie-glaces I_vit_EG est avantageusement fourni par une fonction d'essuie-glaces automatique du véhicule. Cette fonction est basée sur l'utilisation d'un capteur placé sur le pare-brise du véhicule.

Un paramètre hygrométrique P_hy est ensuite déterminé en fonction de la mesure de la température extérieure T_ext et du niveau de vitesse des balais d'essuie-glaces I_vit_EG. L'estimation de la quantité d'oxydes d'azote Est_Nox est corrigée en fonction du paramètre hygrométrique P_hy précédemment déterminé.

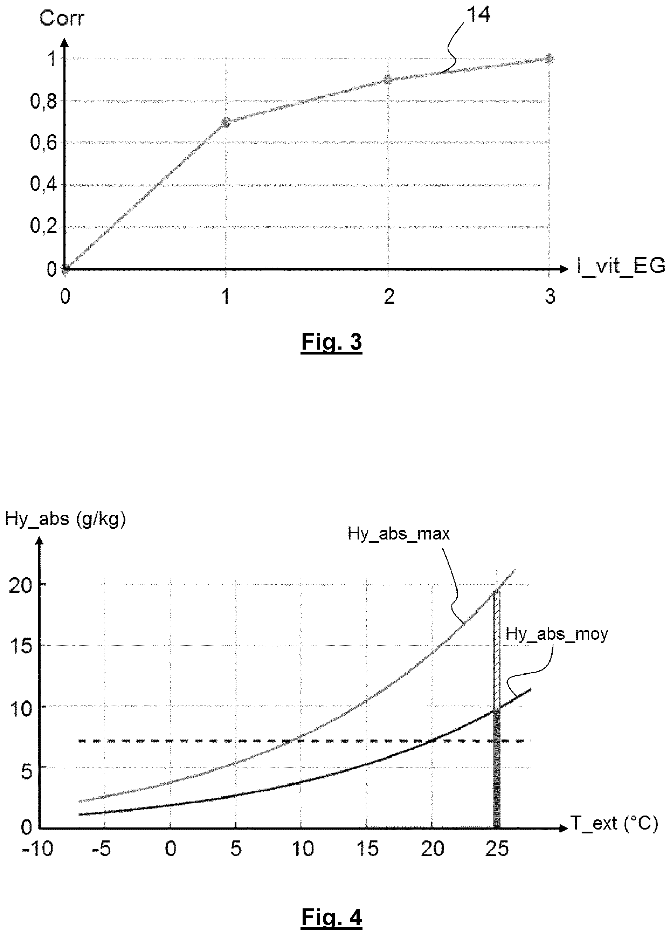

Plus précisément, comme cela est illustré sur la figure 2, le module 10 permet de déterminer une hygrométrie à 100% Hy_abs_max à partir de la température extérieure T_ext. Le module 11 permet de déterminer une hygrométrie moyenne à 50% Hy_abs_moy à partir de la température extérieure T_ext. Le module 12 en déduit un écart en hygrométrie absolue E1. Les hygrométries Hy_abs, respectivement à 50% et à 100%, sont obtenues à partir de la température extérieure T_ext grâce au graphique de la figure 4.

L'écart E1 en hygrométrie absolue est pondéré par un coefficient correctif Corr via le module 13 pour obtenir un écart en hygrométrie absolue pondéré E1'. Comme cela est illustré par la figure 3 représentant la fonction de pondération 14, le coefficient correctif Corr dépend du niveau de vitesse des balais d'essuie-glaces I_vit_EG. Le niveau de vitesse des balais d'essuie-glaces I_vit_EG est défini par exemple par des indices de vitesse pouvant prendre les valeurs 0 (balais d'essuie-glaces à l'arrêt), 1, 2, et 3. Le coefficient correctif Corr est compris par exemple entre 50% et 100% d'hygrométrie à la température d'air extérieur T_ext mesuré.

Par ailleurs, le module 15 calcule une différence entre l'hygrométrie absolue moyenne Hy_abs_moy (à 50%) à la température mesurée et une hygrométrie fictive de référence Hy_abs_ref pour obtenir un écart E2. L'hygrométrie fictive de référence Hy_abs_ref est définie, notamment à un taux de 50% pour une température de référence de 20°C. Le fait de faire intervenir une hygrométrie fictive de référence Hy_abs_ref entraîne une variation fictive correspondant à une situation intermédiaire permettant de faire un minimum d'erreur d'estimation à chaque température.

Le module 16 calcule une somme entre l'écart E1' en hygrométrie absolue pondéré et l'écart E2 par rapport à l'hygrométrie de référence pour obtenir un écart en hygrométrie absolue standard E3. L'écart en hygrométrie absolue standard E3 est multiplié par un gain de correction empirique K via le module 17 pour obtenir le paramètre hygrométrique P_hy. Le gain de correction empirique K est obtenu avantageusement par calibration.

Le module 18 multiplie ensuite le paramètre hygrométrique P_hy précédemment obtenu par une estimation Est_Nox de la quantité d'oxydes d'azote du moteur thermique 2 issue d'un modèle de manière à obtenir une estimation corrigée Est_Nox_corr de la quantité d'oxydes d'azote du moteur thermique 2.

Le procédé selon l'invention pourra être mis en oeuvre sur la base d'un pas de temps de l'ordre d'une seconde. Compte tenu de la sensibilité de l'estimation des oxydes d'azote, il n'y a pas d'intérêt à implémenter un pas de temps de calcul plus court.

On note qu'il est possible d'ajouter à chaque condition une calibration d'inhibition pour avoir de la flexibilité dans la loi de commande.

Dans un exemple de calcul, l'hygrométrie de référence est fixée à 7 g/kg pour une température extérieure T_ext de 20°C, (50%).

L'hygrométrie à 50% à la température d'air extérieure mesurée T_ext, par exemple de 25°C, est de Hy_abs_moy = 10 g/kg.

L'hygrométrie à 100% à la température d'air extérieure mesurée T_ext, par exemple de 25°C, est de Hy_abs_max = 20 g/kg.

Pour une vitesse des balais d'essuie-glaces I_vit_EG correspondant à l'indice 1, on en déduit d'après la figure 3, un coefficient correctif Corr valant 0,7.

On en déduit un écart E3 calculé par rapport à l'hygrométrie de référence Hy_abs_ref valant E3 = ((Hy_abs_max - Hy_abs_moy) x Corr) + (Hy_abs_moy - Hy_abs_ref) = ((20-10)x0,7) + (10-7) = +10 g/kg

On détermine ensuite le paramètre de correction du modèle P_hy égal au produit du gain empirique K et de l'écart E3 précédemment calculé.

## Revendications

1. Procédé de correction d'une estimation d'une quantité d'oxydes d'azote (Est_Nox) générée par un moteur thermique (2) de véhicule automobile, ledit véhicule automobile comportant des balais d'essuie-glaces, **caractérisé en ce que** ledit procédé comporte:
- une étape de mesure d'une température extérieure (T_ext) au véhicule automobile,
- une étape de détermination d'un niveau de vitesse des balais d'essuie-glaces (I_vit_EG),
- une étape de détermination d'un paramètre hygrométrique (P_hy) en fonction de la mesure de la température extérieure (T_ext) et du niveau de vitesse des balais d'essuie-glaces (I_vit_EG), et
- une étape de correction de l'estimation de la quantité d'oxydes d'azote (Est_Nox) en fonction du paramètre hygrométrique (P_hy) précédemment déterminé.

2. Procédé selon la revendication 1, **caractérisé en ce qu'**il comporte une étape de calcul d'un écart en hygrométrie absolue (E1) en fonction de la température extérieure (T_ext) et une étape de pondération de cet écart en hygrométrie absolue (E1) par un coefficient correctif (Corr).

3. Procédé selon la revendication 2, **caractérisé en ce que** le coefficient correctif (Corr) dépend du niveau de vitesse des balais d'essuie-glaces (I_vit_EG).

4. Procédé selon l'une quelconque des revendications 1 à 3, **caractérisé en ce qu'**il comporte une étape de définition d'une hygrométrie fictive de référence (Hy_abs_ref), notamment à 50% pour une température de 20°C, et une étape de calcul d'une différence entre une hygrométrie absolue moyenne (Hy_abs_moy) à la température mesurée et l'hygrométrie fictive de référence (Hy_abs_ref) pour obtenir un écart (E2) par rapport à l'hygrométrie de référence.

5. Procédé selon les revendications 2 et 4, **caractérisé en ce qu'**il comporte l'étape de sommer l'écart (E1) en hygrométrie absolue pondéré et l'écart (E2) par rapport à l'hygrométrie de référence pour obtenir un écart en hygrométrie absolue standard (E3).

6. Procédé selon la revendication 5, **caractérisé en ce que** l'écart en hygrométrie absolue standard (E3) est multiplié par un gain de correction empirique (K) pour obtenir le paramètre hygrométrique (P_hy).

7. Procédé selon la revendication 6, **caractérisé en ce que** le gain de correction empirique (K) est obtenu par calibration.

8. Procédé selon l'une quelconque des revendications 1 à 7, **caractérisé en ce que** le niveau de vitesse des balais d'essuie-glaces (I_vit_EG) est fourni par une fonction d'essuie-glaces automatique du véhicule automobile.

9. Procédé selon l'une quelconque des revendications 1 à 8, **caractérisé en ce qu'**il est mis en oeuvre sur la base d'un pas de temps de calcul de l'ordre d'une seconde.

10. Calculateur (8) comportant une mémoire (9) stockant des instructions logicielles pour la mise en oeuvre du procédé de correction d'une estimation d'une quantité d'oxydes d'azote tel que défini selon l'une quelconque des revendications précédentes.
